**Europäisches Patentamt**

(19) **European Patent Office**

**Office européen des brevets**

(11) Veröffentlichungsnummer: **0 044 973
B1**

(12) **EUROPÄISCHE PATENTSCHRIFT**

(51) Int. Cl.³: **B 01 J 4/00,** C 01 B 21/26,
**F 15 D 1/04**

(45) Veröffentlichungstag der Patentschrift:
**27.07.83**

(21) Anmeldenummer: **81105206.7**

(22) Anmeldetag: **04.07.81**

(54) Vorrichtung zur Verteilung eines aus einem Rohr ankommenden Gases auf den Querschnitt eines Behälters.

(30) Priorität: **24.07.80 DE 3028003**

(43) Veröffentlichungstag der Anmeldung:
**03.02.82 Patentblatt 82/5**

(45) Bekanntmachung des Hinweises auf die Patenterteilung:
**27.07.83 Patentblatt 83/30**

(84) Benannte Vertragsstaaten:
**AT BE CH DE FR GB IT LI NL SE**

(56) Entgegenhaltungen:
**FR-A-702 776
FR-A-2 282 060
GB-A-1 190 282
US-A-2 438 242
US-A-3 597 166
US-A-4 126 539**

(73) Patentinhaber: **BASF Aktiengesellschaft,
Carl-Bosch-Strasse 38, D-6700 Ludwigshafen (DE)**

(72) Erfinder: **Coulon, Guenter, Dr. Phys.,
Hornisgrindestrasse 8, D-6800 Mannheim (DE)**
Erfinder: **Leuckel, Wolfgang, Dr. Ing., Auf der
Judenhut 15, D-6702 Bad Duerkheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zur Verteilung eines aus einem Rohr ankommenden Gases auf
den Querschnitt eines Behälters

Die Erfindung betrifft eine Vorrichtung zur Verteilung eines aus einem Rohr ankommenden Gases auf den Querschnitt eines Behälters, dessen Durchmesser ein Vielfaches des Rohrdurchmessers beträgt, insbesondere zur Verteilung des Ammoniak/Luft-Gemisches bei der katalytischen Ammoniakoxidation.

Zur großtechnischen Herstellung von Salpetersäure wird Ammoniak mit Luftsauerstoff katalytisch zu Stickoxid umgesetzt. Als Katalysator dienen Platinnetze. Die Reaktionstemperaturen liegen im Bereich von 830 bis 960°C. Der Ammoniakoxidation ist ein Abhitzesystem zur Verwertung der beträchtlichen Reaktionswärme nachgeschaltet, im allgemeinen noch im gleichen Behälter.

Das Ammoniak/Luft-Gemisch gelangt im allgemeinen aus einem Rohr über eine Haube in einen zylindrischen Reaktorteil, in dessen oberen Teil die Platinnetze über den Gesamtquerschnitt des Behälters eingespannt sind. Die Haube besteht aus Erweiterungsteil — beispielsweise Kegel oder gewölbter Boden — und zylindrischem Übergangsteil.

Es ist bekannt, daß eine gleichmäßige Anströmung des Netzpakets für eine gute Ausbeute förderlich ist. Eine gleichmäßige Eintrittsströmung in die Haube wird in allgemein üblicher Weise mit geeigneter Aufteilung des Krümmerquerschnitts durch Leitbleche erreicht. Allgemein üblich ist es ferner, im zylindrischen Übergangsteil der Haube ein oder mehrere Lochbleche anzubringen. Sehr häufig werden am Haubeneintritt ein oder mehrere konzentrische Konen mit nach außen zunehmendem Öffnungswinkel angebracht. Eine solche Konstruktion ist in dem US-Patent 3 597 166 beschrieben. Versuche mit derartigen Konen nach dem Stand der Technik haben jedoch gezeigt, daß hierbei in jedem Ringkanal ein Aufreißen der Strömung in Umfangsrichtung und eine Strömungszusammenlagerung auf $1/3$ bis $1/4$ des Ringkanalumfangs mit der Folge eines strahlenartigen Strömungsaustritts am Ringkanalende eintreten.

Auch der Einbau von Lochblechen im zylindrischen Übergangsteil — als alleinige Maßnahme oder in Verbindung mit Strömungsleitkonen im Erweiterungsteil — erwies sich als problematisch. Bei hinreichendem Versperrungsverhältnis wurde aufgrund des erzeugten Druckverlustes zwar eine gleichmäßige Lochdurchströmung erzielt, jedoch zeigte die Strömung eine starke Tendenz, sich in der Verzögerungszone stromabwärts vom Lochblech zu pulsierenden Strähnen zusammenzulagern und somit eine ungleichmäßige Momentan-Querschnittsbelegung mit lokalen Rückströmungen zu erzeugen. Dadurch kann im Falle der Ammoniakoxidation NO vor die Platinnetze zurücktransportiert und mit unverbranntem $NH_3$ zu Stickstoff umgesetzt werden, so daß die Ausbeute an NO verringert wird.

Darüber hinaus haben Einbauten innerhalb der Haube wie z. B. Lochbleche den Nachteil, daß sie auf Temperaturen von 300 bis 500°C erwärmt werden und dabei als katalytisch wirkende Flächen die Vorverbrennung des $NH_3$ zu Stickstoff ermöglichen. Außerdem kann sich auf derartigen Einbauten von den Netzen durch Rückströmung hochgewirbelter Platinstaub absetzen.

Es war daher die Aufgabe der vorliegenden Erfindung, zum einen die Durchströmung der Platinnetze möglichst gleichmäßig und rückströmungsfrei zu führen und zum anderen Einbauten in der Haube zu vermeiden.

Diese Aufgabe wird erfindungsgemäß dadurch gelöst, daß das Eintrittsrohr mit einem konzentrisch angeordneten Innenrohr ausgestattet ist und im Kreisring zwischen Eintritts- und Innenrohr zur Erzeugung eines Dralles Einbauten in Form eines Kranzes von Leitschaufeln mit einem Anstellwinkel von 30 bis 55° gegenüber der Strömungsrichtung angeordnet sind.

Ein Ausführungsbeispiel der Erfindung wird nachstehend anhand der Zeichnungen näher erläutert. Es zeigt

Fig. 1 im axialen Längsschnitt das Oberteil eines Ammoniak-Verbrennungsofens mit Einbau des erfindungsgemäßen Strömungsverteilers in schematischer Darstellung,

Fig. 2 einen Querschnitt mit Draufsicht auf den Strömungsverteiler an der in Fig. 1 mit Schnitt a-a bezeichneten Stelle.

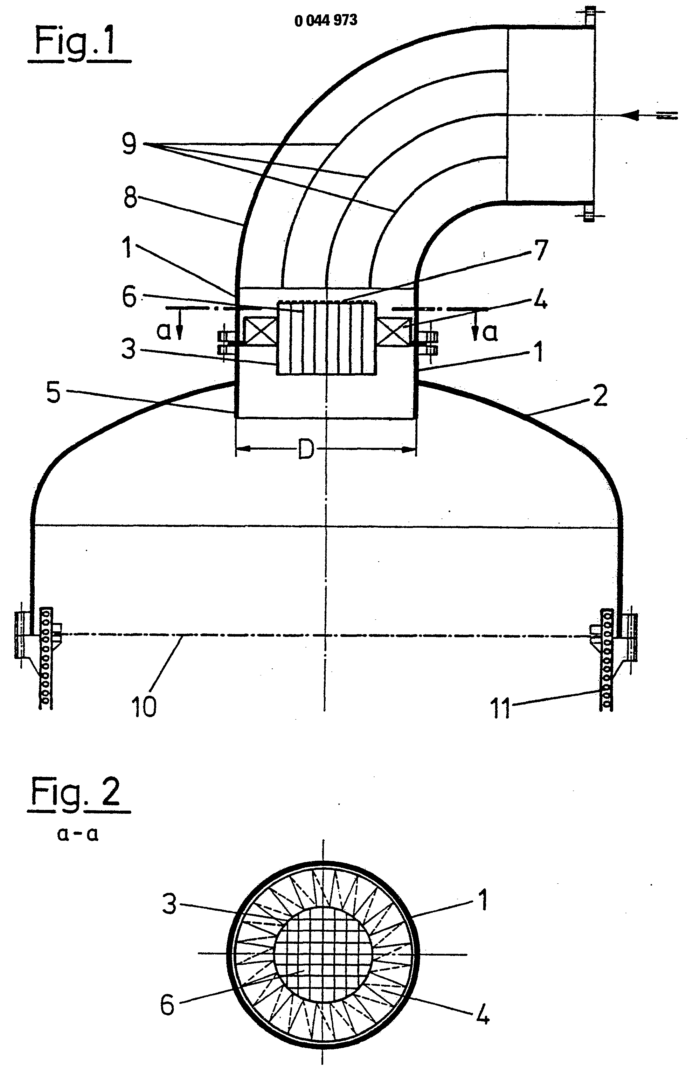

Die Gasströmung tritt in üblicher Weise über einen mit Leitblechen 9 versehenen Rohrkrümmer 8 und ein kurzes gerades Eintrittsrohr 1 in die Haube 2 und anschließend in den zylindrischen Reaktorteil ein. Am Haubenende sind die Pt-Netze 10 angebracht. Nach der Reaktion an den Pt-Netzen treten die heißen Gase in den mit der Haube über ein Flanschpaar verbundenen Abhitzeteil 11 ein, von dem in Fig. 1 nur das obere Ende mit Beginn der Wandberohrung eingezeichnet ist, die zum thermischen Schutz des Behältermantels eingesetzt wird.

Das Konzept des neuen Strömungsverteilers beinhaltet, durch Einbauten lediglich im kalten Eintrittsrohr 1 die Strömung bis zum Netz hin gewissermaßen fernzusteuern. Zu diesem Zweck wird die Strömung im Eintrittsrohr durch ein konzentrisches Innenrohr 3 unterteilt und der Außenstrom durch Einbauten 4 mit einem Drehimpuls versehen. Die Kombination von verdralltem Außenstrom mit axialer Kernströmung bewirkt, daß die Strömung sich an der Haubenwand stabil anlegt, ohne daß auf der Reaktorachse ein Rückströmgebiet ausgebildet wird.

Es hat sich als vorteilhaft erwiesen, zur Verdrallung des Außenstromes in den Kreisring zwischen Eintrittsrohr und Innenrohr einen Kranz von Leitschaufeln 4 zu legen.

Der Anstellwinkel der Leitschaufeln gegenüber der Anströmrichtung sollte je nach Öffnungswinkel der Strömung 30 bis 55° betragen. Um ein einseitiges Anlegen der Strömung an die Haubenwand mit Rückströmung auf der Haubengegenseite zu vermeiden, ist es zweckmäßig, daß das Eintrittsrohr unter Bildung einer Abrißkante 5 in den Behälter hineinragt. Anstatt die Kernströmung axial mit einem in Achsrichtung verlaufenden Wabenbündel 6 gleichzurichten, kann man sie zur Stabilisierung alternativ auch mit einem leichten Drall versehen. Die dazu im Kernrohr statt der Gleichrichterwaben einzusetzenden Leitschaufeln dürfen dann nur einen Anstellwinkel von maximal 15° aufweisen, um Rückströmung auf der Reaktorachse zu vermeiden. Um das Verhältnis der Gasströme im Innenrohr und im Kreisring aufeinander abzustimmen, ist es notwendig, am Eintrittsende des Innenrohres einen Strömungswiderstand, z. B. ein Sieb 7, anzubringen.

In einer weiteren vorteilhaften Ausgestaltung der Erfindung wird für das Verhältnis der Durchmesser Innenrohr zu Eintrittsrohr 0,4 bis 0,7 gewählt. Der Abstand vom Ende des Innenrohres bis zum Ende des Eintrittsrohres sollte das 0,1- bis 0,5fache des Eintrittsrohrdurchmessers betragen. Dadurch wird vor dem Eintritt in die Haube eine Verzahnung von Kern- und Außenströmung bewirkt.

Im Falle der katalytischen Ammoniakoxidation bestehen die Vorteile des Einbaues des erfindungsgemäßen Strömungsverteilers gegenüber dem Stand der Technik hauptsächlich darin, daß durch gleichmäßige und rückströmungsfreie Verteilung des Reaktionsgases auf die Platinnetze die Ausbeute gesteigert wird. Ein weiterer Vorteil liegt darin, daß durch Verzicht auf Einbauten im Haubenteil einerseits und Ausschaltung von Rückströmung andererseits Betriebsstörungen durch Rückzündungen vermieden werden.

## Patentansprüche

1. Vorrichtung zur Verteilung eines aus einem Rohr ankommenden Gases auf den Querschnitt eines Behälters, dessen Durchmesser ein Vielfaches des Rohrdurchmessers beträgt, insbesondere zur Verteilung des Ammoniak/Luft-Gemisches bei der katalytischen Ammoniakoxidation, dadurch gekennzeichnet, daß das Eintrittsrohr (1) mit einem konzentrisch angeordneten Innenrohr (3) ausgestattet ist und im Kreisring zwischen Eintrittsrohr und Innenrohr zur Erzeugung eines Dralles Einbauten (4) in Form eines Kranzes von Leitschaufeln mit einem Anstellwinkel von 30 bis 55° gegenüber der Strömungsrichtung angeordnet sind.

2. Vorrichtung nach Anspruch 1, dadurch gekennzeichnet, daß das Eintrittsrohr (1) unter Bildung einer Abrißkante (5) in den Behälter hineinragt.

3. Vorrichtung nach den Ansprüchen 1 oder 2, dadurch gekennzeichnet, daß das konzentrisch angeordnete Innenrohr (3) mit einem in Achsrichtung verlaufenden Wabenbündel (6) oder Leitschaufeln, deren Anstellwinkel maximal 15° betragen, versehen ist.

4. Vorrichtung nach den Ansprüchen 1 bis 3, dadurch gekennzeichnet, daß am Eintrittsende des Innenrohres (3) ein Strömungswiderstand (7), beispielsweise in Form eines Siebes, angebracht ist.

5. Vorrichtung nach den Ansprüchen 1 bis 4, dadurch gekennzeichnet, daß das Verhältnis der Durchmesser Innenrohr (3) zu Eintrittsrohr (1) 0,4 bis 0,7 beträgt.

6. Vorrichtung nach den Ansprüchen 1 bis 5, dadurch gekennzeichnet, daß in Strömungsrichtung gesehen der Abstand vom Ende des Innenrohres (3) bis zum Ende des Eintrittrohres (1) das 0,1- bis 0,5fache des Eintrittsrohrdurchmessers beträgt.

## Claims

1. Apparatus for distributing a gas, coming from a pipe, over the cross-section of a vessel whose diameter is a multiple of the pipe diameter, in particular for distributing the ammonia/air mixture from the catalytic oxidation of ammonia, wherein the entry pipe (1) is equipped with a concentric inner pipe (3), and internal fitments (4) for creating a vortical motion are provided in the annular space between the entry pipe and the inner pipe, the internal fitments being in the form of a ring of guide vanes, the angle of attack of which to the flow direction is from 30 to 55°.

2. Apparatus as claimed in claim 1, wherein the entry pipe (1) protrudes into the vessel, to form a breaker edge (5).

3. Apparatus as claimed in claim 1 or 2, wherein the concentric inner pipe (3) is provided with a honeycomb bundle (6) running in the axial direction, or with guide vanes whose angle of attack is at most 15°.

4. Apparatus as claimed in claims 1 to 3, wherein a flow resistance (7), for example in the form of a screen, is provieded at the entry end of the inner pipe (3).

5. Apparatus as claimed in claims 1 to 4, wherein the ratio of the diameter of the inner pipe (3) to the diameter of the entry pipe (1) is from 0.4 to 0.7.

6. Apparatus as claimed in claims 1 to 5, wherein, viewed in the flow direction, the distance from the end of the inner pipe (3) to the end of the entry pipe (1) is from 0.1 to 0.5 times the diameter of the entry pipe.

## Revendications

1. Dispositif pour la répartition d'un gaz sortant d'un tuyau sur la section transversale d'un réservoir, dont le diamètre est un multiple du diamètre du tuyau, en particulier pour la répartition du mélange ammoniac-air dans l'oxydation catalysée de l'ammoniac, caractérisé en ce qu'un tube concentrique (3) est disposé à l'intérieur du tuyau d'arrivée (1), tandis que, dans l'espace annulaire entre le tuyau d'arrivée et le tube intérieur, sont disposées des chicanes (4), constituant une couronne d'auges directrices avec un angle d'incidence de 30 à 55° par rapport au sens d'écoulement en vue de la création d'un mouvement rotatoire.

2. Dispositif suivant la revendication 1, caractérisé en ce que le tuyau d'arrivée (1) plonge dans le réservoir en y formant une arête de décollement (5).

3. Dispositif suivant les revendications 1 et 2, caractérisé en ce que le tube concentrique intérieur (3) est équipé de chicanes axiales en nid d'abeilles (6) ou d'auges directrices, dont l'angle d'incidence n'est pas supérieur à 15°.

4. Dispositif suivant les revendications 1 à 3, caractérisé en ce que, à l'extrémité d'entrée du tube intérieur (3), est disposé un organe de résistance à l'écoulement (7), par exemple un organe formant tamis.

5. Dispositif suivant les revendications 1 à 4, caractérisé en ce que le rapport entre le diamètre du tube intérieur (3) et le diamètre du tuyau d'arrivée (1) est de 0,4 à 0,7.

6. Dispositif suivant les revendications 1 à 5, caractérisé en ce que la distance entre l'extrémité du tube intérieur (3) et l'extrémité du tuyau d'arrivée (1), dans le sens d'écoulement, correspond à 0,1 – 0,5 fois le diamètre du tuyau d'arrivée.

# Fig.1

# Fig. 2
## a-a